# EUROPEAN PATENT APPLICATION

(11) **EP 0 694 908 A1**
(43) Date of publication of application: **31.01.1996**
(21) Application number: 95109991.0
(22) Date of filing: 24.06.1995
(51) Int. Cl.: G11B 5/147, G11B 5/153, G11B 5/23, G11B 5/235, H01F 10/08, H01F 10/10, H01F 10/12, H01F 10/14

(54) **Magnetic head having a diffusion bonded gap and diffusion bonded laminated core**

(30) Priority: 30.06.1994 US 268354
(71) Applicant: EASTMAN KODAK COMPANY, Rochester, New York 14650 (US)
(72) Inventor: West, Bradford Drake, Jr., c/o Eastman Kodak Co., Rochester, New York 14650-2201 (US); Compton, Helen E., c/o Eastman Kodak Co., Rochester, New York 14650-2201 (US); Zeltser, Alexander Michael, c/o Eastman Kodak Co., Rochester, New York 14650-2201 (US)
(74) Representative: Schmidt, Peter, Dipl.-Ing.

(57) **Abstract**

In the fabrication of a magnetic head, quarter cores (14), (16), (18), (20) of the head are deposited on ceramic substrates (10), (12). These quarter cores (14), (16), (18), (20) consist of successively deposited magnetic laminations (22), (24), (26), (28), (30), (32), (34), (36) separated by insulating layers (38), (40), (42), (44), and the core thickness of each quarter core (14), (16), (18), (20) is established at one-half the track width of the finished head. In accordance with the teachings of the invention, a layer of diffusion bonding material (46), (48), (50), (52) is deposited on the top lamination surfaces of a pair of quarter cores (14), (16), (18), (20). The quarter cores (14), (16), (18), (20) are then placed in contact and in geometrical registration and subjected to elevated temperature and pressure to effect bonding of the in-contact laminations of the quarter cores (14), (16), (18), (20). Upon completion of this first bonding step, the resultant half core structure has a full magnetic track width, and both faces of the core laminations are planarly clad by the substrates. The edges of two half core structures are then lapped to provide the surfaces which form the head's gap line, and an aperture is ground in an edge of one of the half cores to provide a coil winding window. The gap line forming surfaces are deposited with diffusion bonding Au layers (70), (72), (74), placed in abutment, and subjected to the increased pressure and temperature bonding conditions. After the second bonding operation, which does not disturb the previous bond joining the quarter core laminations (14), (16), (18), (20), the head structure essentially stands complete. The head/tape interface is then contoured, and the resultant head finished by winding a coil through the window.

## Description

This invention relates to a magnetic head, and in particular to a magnetic head having diffusion bonded elements.

As the field of magnetic recording continues to expand, improved methods of fabrication in the mass production of heads with attendant cost reduction and better performance is of primary interest. One of the promising current manufacturing techniques is that of diffusion bonding. Diffusion bonding is effected by deposition of thin layers of a bonding material, of which Au or Ag are preferred materials, on the two surfaces to be joined by the bonding process. The two surfaces are then placed in abutment and pressure applied to ensure intimate contact. The temperature is raised to between 200 and 400 degrees C, at which temperature the bonding takes place. Once the pieces are bonded they are substantially immune to separation during the further processing of the bonded elements. Thereby, diffusion bonding allows the sequential bonding of different elements of a head without the second bonding process disturbing the first bond.

A problem exists in the practice of the prior art wherein bonding was performed through the use of glasses having different melting points in the sequential bonding processes. The second bond was required to be made with a glass of lower melting point than that used for the first bond in order to preserve the integrity of the first bond during the second bonding step. Also the temperatures at which the diffusion bonding occurs are below those which cause deterioration in the magnetic properties of the materials forming the core of the head. US-A-5,162,960 discloses the use of diffusion bonding in forming the gap between two magnetic cores and for attaching ceramic end plates and a ceramic cover plate to the cores of a magnetic head.

According to the present invention, there is provided a solution to the problems of the prior art. In the fabrication of a magnetic head, quarter cores of the head are deposited on ceramic substrates. These quarter cores consist of successively deposited magnetic laminations separated by insulating layers, and the core thickness of each quarter core is established at one-half the track width of the finished head. In accordance with the teachings of the invention, a layer of diffusion bonding material is deposited on the top lamination surfaces of a pair of quarter cores. The quarter cores are then placed in contact and in geometrical registration and subjected to elevated temperature and pressure to effect bonding of the in-contact laminations of the quarter cores. Upon completion of this first bonding step, the resultant half core structure has a full magnetic track width, and both faces of the core laminations are planarly clad by the substrates. The edges of two half core structures are then lapped to provide the surfaces which form the head's gap line, and an aperture is ground in an edge of one of the half cores to provide a coil winding window. The gap line forming surfaces are deposited with diffusion bonding Au layers, placed in abutment, and subjected to the increased pressure and temperature bonding conditions. After the second bonding operation, which does not disturb the previous bond joining the quarter core laminations, the head structure essentially stands complete. The head/tape interface is then contoured, and the resultant head finished by winding a coil through the window.

It will be noted that by following the teachings of the invention the deposition time may be effectively halved as the magnetic films are simultaneously deposited on the ceramic bars which, when the head processing is complete, become the cladding elements of the head.

The invention will be described with respect to the drawings of which:
Fig. 1 is an illustration of an early stage in the fabrication of elements of the head of invention,
Fig. 2 is a drawing showing half cores of the head of the invention before separation of the cores,
Fig. 3 is a drawing of two half sections of the head juxtaposed before being diffusion bonded, and
Fig.4 is a drawing of the completed head of the invention.

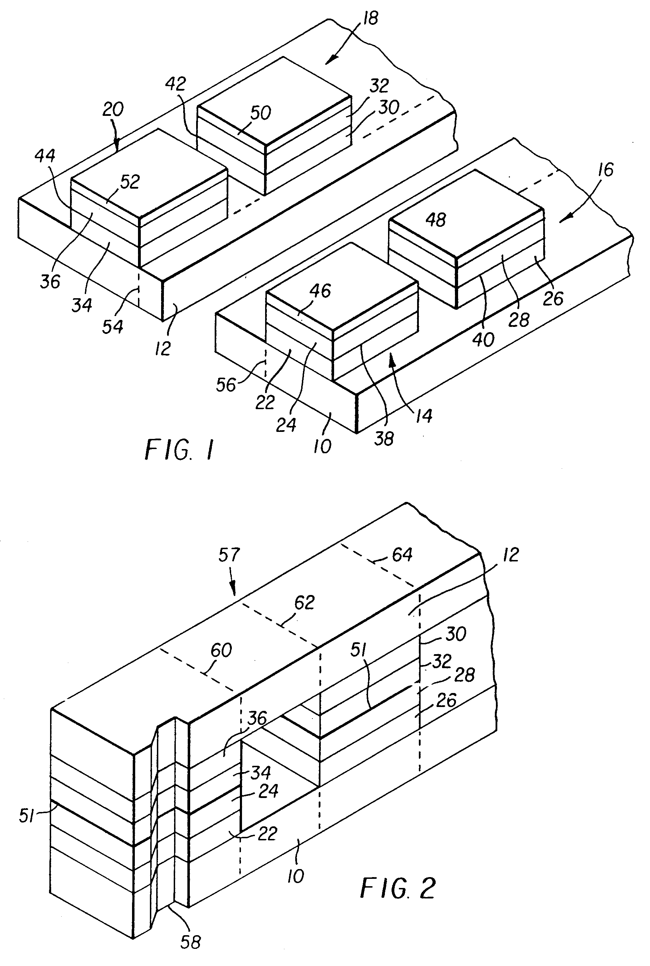

Referring to Fig. 1, substrates 10, 12 have quarter core structures 14,16,18,20 deposited thereon. The quarter core 14 consists of thin magnetic laminations 22,24, quarter core 16 of thin magnetic laminations 26,28, quarter core 18 of thin magnetic laminations 30, 32 and quarter core 20 of thin magnetic laminations 34,36. The laminations (for example, 22,24) are deposited by sputtering, or by other deposition means known in the art, from a magnetic material such as FeRuGaSi in a manner known in the art, and the individual laminations are electrically insulated from its adjacent neighbor by means of thin layers 38,40,42,44 of deposited SiO2 or similar insulating material. To fabricate half cores from the quarter core structures 14,16,18,20, the substrates 10, 12 are overlaid on each other and the quarter core structure 14 is bonded to that of quarter core structure 20, and the quarter core structure 16 is bonded to quarter core structure 18. To effect the bonding, prior to overlaying the substrates 10,12, the surfaces of laminations 24,28,32,36 are deposited with thin bonding layers of Au, 46,48,50,52 respectively.

The substrates 10,12 are then placed on each other with the quarter core structures 16,18 and 14,20 in geometrical registration and the temperature set between 200-400 degrees C to effect the bonding of the laminations by diffusion of the Au layer 46 into layer 52, and layer 48 into layer 50. After bonding the resultant structure of bonded laminations and substrates is lapped down to lines 54, 56.

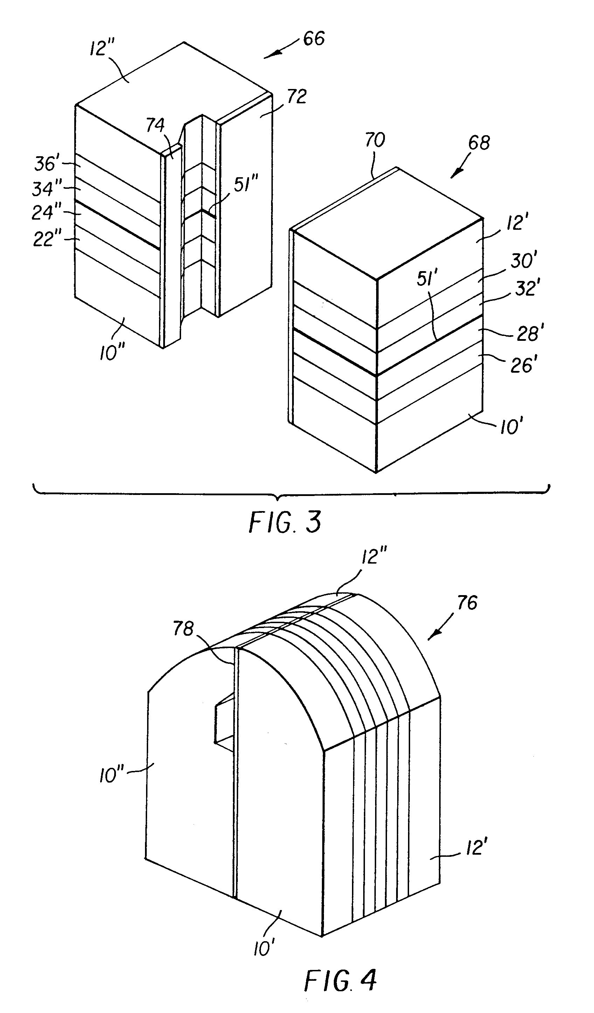

After lapping, an aperture 58 is ground into one edge of the resultant structure 57 as shown in Fig. 2, and the structure 57 is then diced along the lines 60,62,64 to provide two half cores 66,68 (Fig. 3) for bonding along the gap line surfaces to form the completed head structure. It will be seen that half core 68 consists of the substrate portions 10', 12' sandwiching the head laminations 26',28',32',30', which have previously been diffusion bonded along the bond line 51'. (In the drawings different but related elements are identified with the same reference characters, albeit that corresponding elements in the various drawings are distinguished by primes.) Similarly, the half core 66 consists of substrate portions 10'',12'' sandwiching the head laminations 22',24'34'36' previously diffusion bonded along the line 51''. An Au bonding layer 70 is deposited on the face of the half core structure 68, and Au layers 72,74 are deposited on the face of the half core 66. The half cores 66,68 are placed with the bonding layers 70 and 72,74 in contact, pressure applied and the temperature raised to 200-400 degrees C to effect diffusion bonding of the half cores 66,68. This second bonding step not only joins the two half cores 66,68 but also establishes the gap width 78 (Fig. 4) of the magnetic head. The bonded head structure is then contoured to provide the head/tape interface resulting in the completed head structure 76 as seen in Fig. 4.

## Claims

1. A magnetic head comprising:
a) a first substrate (10),
b) a first multiplicity of magnetic core laminations (14),(16) deposited on the first substrate,
c) a second substrate (12),
d) a second multiplicity of magnetic core laminations (18),(20) deposited on the second substrate,
e) a first diffusion bonding layer (46),(48),(50),(52) bonding the first multiplicity of magnetic core laminations to the second multiplicity of magnetic core laminations, wherein a half core of the magnetic head is formed,
f) a first and a second of the half cores abutted to form a gap line of the head, the first and the second half cores joined by a second diffusion bond (70),(72),(74) along the gap line.

2. The magnetic head of Claim 1 wherein the bonding layers (46),(48),(50),(52),(70),(72),(74) are Au.

3. The magnetic head of Claim 1 wherein the bonding layers (46),(48),(50),(52),(70),(72),(74) are Ag.

4. The magnetic head of Claim 1 wherein the magnetic laminations (22),(24),(26),(28),(30),(32), (34),(36) are FeGaRuSi.

5. The magnetic head of Claim 1 wherein the laminations (22),(24),(26),(28),(30),(32),(34),(36) of the half cores are insulated (38),(40),(42),(44) from each other.

6. A method of fabricating a magnetic head comprising the steps of:
a) depositing a first multiplicity of magnetic laminations (14),(16) on a first substrate (10),
b) depositing a second multiplicity of magnetic laminations (18),(20) on a second substrate (12),
c) depositing a first diffusion bonding layer (46),(48) onto the first multiplicity of magnetic laminations (14),(16) on the first substrate (10),
d) depositing a second diffusion bonding layer (50),(52) onto the second multiplicity of magnetic laminations (18),(20) on the second substrate (12),
e) overlaying the first and the second multiplicity of magnetic layers (14),(16),(18),(20) in geometric registration so that the first diffusion bonding layer (46),(48) is in facial contact with the second diffusion bonding layer (50),(52),
f) raising the temperature of the first and the second multiplicity of magnetic layers (14),(16), (18),(20) to 200-400 degrees C to effect a first diffusion bond,
g) dicing out portions of the first and the second substrates (10),(12) and the first and the second multiplicity of magnetic laminations (14),(16), (18),(20) to form half cores of the magnetic head,
h) forming a window in a first of the half cores,
i) depositing a third diffusion bonding layer (70) on the first half core,
j) depositing a fourth diffusion bonding layer (72),(74) on a second half core,
k) placing the first and second half cores in alignment so that first diffusion layer (70) is in facial contact with the second diffusion layer (72),(74),
l) raising the temperature of the first and the second half cores to 200-400 degrees C, so that at the first half core is diffusion bonded to the second half core at the first and the second diffusion layers (70),(72),(74), wherein a gap line is formed between the first half core and the second half core.

7. The method of claim 6 wherein the first, second, third and fourth bonding layers (46,48,50,52,70,72,74) are all Au.

8. The method of claim 6 wherein the first, second, third and fourth bonding layers (46,48,50,52,70,72,74) are all Ag.

9. The method of Claim 6 wherein the laminations (14),(16),(18),(20) are FeGaRuSi.
